(19) Europäisches Patentamt
European Patent Office
Office européen des brevets

(11) **EP 3 270 209 A1**

(12) **EUROPEAN PATENT APPLICATION**
published in accordance with Art. 153(4) EPC

(43) Date of publication:
**17.01.2018 Bulletin 2018/03**

(51) Int Cl.:
**G02B 27/02** (2006.01)  **G02B 5/32** (2006.01)
**G02B 17/08** (2006.01)

(21) Application number: **16764698.3**

(22) Date of filing: **02.03.2016**

(86) International application number:
**PCT/JP2016/056418**

(87) International publication number:
**WO 2016/147868 (22.09.2016 Gazette 2016/38)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **13.03.2015 JP 2015050726**

(71) Applicant: **Konica Minolta, Inc.**
**Tokyo 100-7015 (JP)**

(72) Inventor: **INAGAKI Yoshihiro**
**Tokyo 100-7015 (JP)**

(74) Representative: **Gille Hrabal**
**Brucknerstrasse 20**
**40593 Düsseldorf (DE)**

(54) **IMAGE DISPLAY DEVICE AND OPTICAL SEE-THROUGH DISPLAY**

(57) The image display device according to the present invention has a display element for displaying an image, and an eyepiece optical system for leading image light from the display element to the pupil of an observer. The eyepiece optical system has a prism and a volume-phase-type holographic optical element, and the holographic optical element is in contact with the prism. The prism surface in contact with the holographic optical element comprises a conical surface, and the prism surface on which the image light from the display element is first incident comprises a conical surface.

FIG.1

## Description

### Technical Field

The present invention relates to an image display apparatus and an optical see-through display. More particularly, the present invention relates to an image display apparatus that projection-displays, at an observer's eye, a two-dimensional image on a liquid crystal display (LCD) element by use of a holographic optical element (HOE), and to an optical see-through display (for example, an HMD (head-mounted display) or HUD (head-up display) provided with such an image display apparatus.

### Background Art

In image display apparatuses that incorporate a volume-phase holographic optical element for see-through display of an image, there is conventionally known a technology of curving the holographic optical element to improve the imaging state. For example, Patent Document 1 proposes making the diffractive power in the horizontal direction of the screen zero to improve the imaging state.

### List of Citations

### Patent Literature

Patent Document 1: WO2014/156599 A1

### Summary of the Invention

### Technical Problem

However, with the image display apparatus disclosed in Patent Document 1, it is difficult to satisfy simultaneously a condition for correcting curvature of field and a condition for correcting distortion, and distortion tends to be rather large. Distortion can be corrected, for example, by correcting the image signal through calculation, but this method is disadvantageous in view of the electric power consumed.

Against the above background, an object of the present invention is to provide an image display apparatus that allows see-through display of an image with satisfactorily corrected distortion, and to provide an optical see-through display provided with such an image display apparatus.

### Means for Solving the Problem

To achieve the above object, according to one aspect of the present invention, an image display apparatus includes: a display element which displays an image; and an eyepiece optical system which guides the image light from the display element to an observer's pupil. The eyepiece optical system includes: a prism on which the image light is incident; and a volume-phase holographic optical element which diffracts the image light that is guided inside the prism. The holographic optical element lies in contact with the prism. The prism surface that lies in contact with the holographic optical element is formed of a conic surface, and the prism surface on which the image light from the display element is incident first is formed of a conic surface.

According to another aspect of the present invention, an optical see-through display includes an image display apparatus according to the present invention so as to have a function of projection-displaying, with the holographic optical element, the image at an observer's eye in a see-through fashion.

### Advantageous Effects of the Invention

According to the present invention, it is possible to provide an image display apparatus that allows see-through display of an image with satisfactorily corrected distortion, and to provide an optical see-through display provided with such an image display apparatus.

### Brief Description of Drawings

Fig. 1 is an outline sectional view schematically showing an image display apparatus according to one embodiment (Practical Example) of the present invention;

Fig. 2 is a perspective view showing a prism in the image display apparatus of Fig. 1;

Fig. 3 is a rear view showing the prism in the image display apparatus of Fig. 1 as seen from the observer's eye side;

Fig. 4 is a front view showing the prism in the image display apparatus of Fig. 1 as seen from the outside world side;

Fig. 5 is a perspective view showing an eyeglasses-like head-mounted display provided with the image display apparatus of Fig. 1;

Fig. 6 is an outline sectional view schematically showing an image display apparatus for comparison (Comparative Example);

Fig. 7 is a graph showing the distortion in Practical Example and Comparative Example;

Fig. 8 is a graph showing the curves of the top and bottom sides of distortion in Practical Example;

Fig. 9 is a graph showing the curves of the top and bottom sides of distortion in Comparative Example;

Fig. 10 is a graph showing the curvature of field in Practical Example; and

Fig. 11 is a graph showing the curvature of field in Comparative Example.

**Description of Embodiments**

Hereinafter, image display apparatuses, optical see-through displays, and the like according to the present invention will be described with reference to the accompanying drawings. Such parts as are identical or equivalent among different embodiments are identified by common reference signs, and overlapping description will be omitted unless necessary.

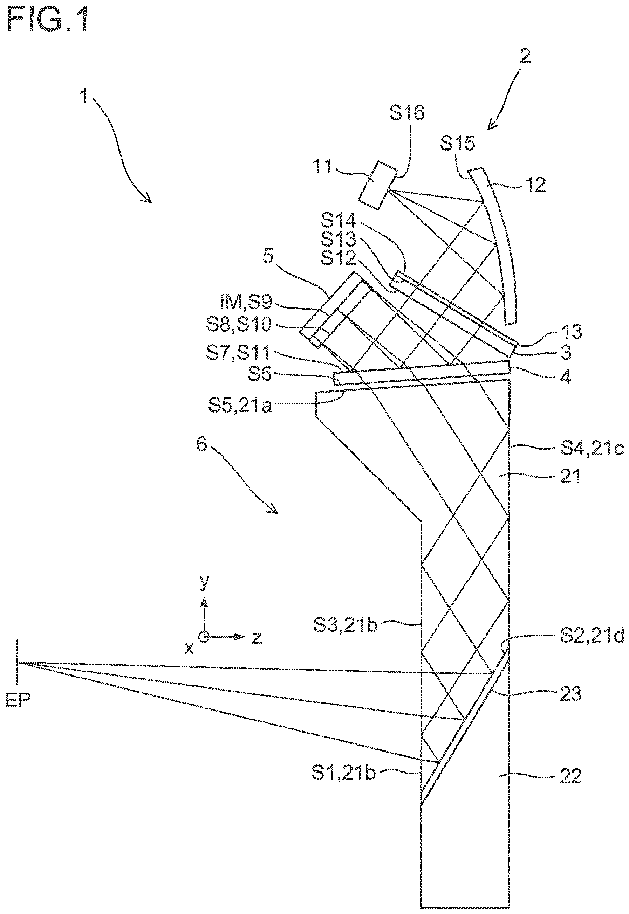

Fig. 1 schematically shows an outline sectional structure of an image display apparatus 1 according to one embodiment of the present invention. The image display apparatus 1 includes an illumination optical system 2, a polarizer plate 3, a polarizing beam splitter 4, a display element 5, and an eyepiece optical system 6. For the sake of convenient description, different directions are defined as follows. The axis that optically connects between the center of the pupil EP formed by the eyepiece optical system 6 and the center of the display surface of the display element 5 is, along with its extension line, taken as the optical axis. The direction perpendicular to the optical axis incidence surface of a holographic optical element 23 provided in the eyepiece optical system 6 is taken as the X direction. The optical axis incidence surface of the holographic optical element 23 denotes the plane that includes both the optical axis of incident light and the optical axis of reflected light with respect to the holographic optical element 23. At the intersection of each optical member with the optical axis, the direction perpendicular to the X direction on the plane perpendicular to the surface normal is taken as the Y direction.

The illumination optical system 2 illuminates the display element 5, and includes a light source 11, an illuminating mirror 12, and a diffuser plate 13. The light source 11 is provided with two RGB-integrated LEDs (light-emitting diodes) each having three, namely R (red), G (green), and B (blue), luminous points in a single package, and emits light corresponding to the colors of R, G, and B respectively. The light emitted from the light source 11 has wavelengths in the ranges of, for example, $462\pm12$ nm (B light), $525\pm17$ nm (G light), and $635\pm11$ nm (R light) in terms of light intensity peak wavelength combined with half-intensity wavelength width.

The R, G, and B luminous points in the light source 11 are arrayed substantially in a straight line so as to be located symmetrically with respect to the optical axis incidence surface of the holographic optical element 23. For example, the luminous points are arrayed in the order BGRRGB in the X direction. Arraying the R, G, and B luminous points substantially in a straight line in the horizontal direction (X direction) as described above makes the RGB light intensity distribution symmetric with respect to the X direction.

The illuminating mirror 12 is an optical element that reflects the light (illumination light) emitted from the light source 11 toward the diffuser plate 13 and that simultaneously deflects the illumination light such that the pupil EP and the light source 11 are substantially conjugate with each other with respect to the Y direction, and is in this embodiment assumed to be a free-form surface mirror. The diffuser plate 13 is a unidirectional diffuser plate that diffuses the incident light across, for example, 40 degrees in the X direction, in which the plurality of luminous points of the light source 11 are arrayed, but that does not diffuse the incident light in the Y direction (that is, it diffuses light only in the horizontal direction), and is held on the surface of the polarizer plate 3 by being bonded to it.

The polarizer plate 3 transmits, of the light incident on it via the diffuser plate 13, light of a predetermined polarization direction to direct it to the polarizing beam splitter 4. The direction of the polarizing beam splitter 4 is so aligned that the polarized light transmitted through polarizer plate 3 is reflected by the polarizing beam splitter 4.

The polarizing beam splitter 4 is a flat plate-form polarization splitting element that, on one hand, reflects the light transmitted through the polarizer plate 3 toward the display element 5, which is of a reflection type, and that, on the other hand, transmits, of the light reflected from the display element 5, light corresponding to ON in an image signal (light with a polarization direction perpendicular to that of the light transmitted through the polarizer plate 3), and is disposed with a predetermined gap left from the prism surface 21a on which light is incident first in a prism 21 provided in the eyepiece optical system 6.

The display element 5 is a display element that modulates the light from the illumination optical system 2 (that is, the light reflected from the polarizing beam splitter 4) to display an image IM. In this embodiment, the display element 5 is assumed to be a liquid crystal display element of a reflection type. The display element 5 may be configured to include a color filter, or may be configured to be driven separately for R, G, and B on a time division basis.

The display element 5 is disposed such that the light incident substantially perpendicularly on it from the polarizing beam splitter 4 is reflected substantially perpendicularly toward the polarizing beam splitter 4. With this construction, as compared with one where light is made incident on a display element of a reflection type at a large angle of incidence, it is easier to devise an optical design that offers enhanced resolution. The display surface of the display element 5 is rectangular, and is disposed such that the longer and shorter sides of the display surface are aligned with the X and Y directions respectively.

The display element 5 is displayed on the same side as the light source 11 with respect to the optical path from the illuminating mirror 12 to the polarizing beam splitter 4. This helps make compact the entire optical system from the illumination optical system 2 to the display element 5. The display element 5 may be supported by the same base as the light source 11, or may be supported by a separate base (in Fig. 1, the support base for the light source 11 and the display element 5 is omitted from illustration).

The eyepiece optical system 6 is an optical system that guides the image light from the display element 5 to the pupil EP of an observer, and has a non-axisymmetric (non-rotation-symmetric) positive optical power. The eyepiece optical system 6 includes a prism 21, a prism 22, and a holographic optical element 23.

The prism 21, on one hand, guides inside itself the image light that is incident on it from the display element 5 via the polarizing beam splitter 4 and, on the other hand, transmits the light (outside light) of an outside world image, and is configured in a shape like a plane-parallel plate of which a top end part is made increasingly thick upward and of which a bottom end part is made increasingly thin downward.

Of the prism 21, the prism surface 21a that faces the polarizing beam splitter 4 is the optical surface on which the image light from the display element 5 is incident first. The two prism surfaces 21b and 21c that are located substantially parallel to the pupil EP and that face each other are total-reflection surfaces that guide the image light by totally reflecting it. Of these surface, the prism surface 21b on the pupil EP side serves also as the emergence surface of the image light diffraction-reflected by the holographic optical element 23, and is the only one formed of a flat surface among those surfaces constituting the prism 21 through which the image light is transmitted.

The prism 21 is joined to the prism 22 with adhesive such that the holographic optical element 23 disposed in a bottom end part of the former is held between them. The shapes of, in the prism 21, the prism surface 21a on which the image light from the display element 5 is incident first and the prism surface 21d that lies in contact with the holographic optical element 23 will be described later.

The prism 22, by being bonded to the prism 21 via the holographic optical element 23, substantially forms a plane-parallel plate. Bonding together the prisms 22 and 21 helps cancel, with the prism 22, the refraction that occurs when outside light is transmitted through a wedge-form bottom end part of the prism 21, and thus helps prevent distortion in the observed outside world image.

The holographic optical element 23 is a volume-phase hologram optical element of a reflection type that is disposed in contact with the prism 21 and that diffraction-reflects the image light guided inside the prism 21. The holographic optical element 23 diffracts (reflects) light in three wavelength ranges of, for example, $465 \pm 5$ nm (B light), $521 \pm 5$ nm (G light), and $634 \pm 5$ nm (R light) in terms of diffraction efficiency peak wavelength combined with half-efficiency wavelength width. Thus, the RGB diffraction wavelengths of the holographic optical element 23 substantially coincide with the wavelengths of the RGB image light (the emission wavelengths of the light source 11).

In the construction described above, the light emitted from the light source 11 in the illumination optical system 2 is reflected by the illuminating mirror 12, and is diffused only in the X direction by the diffuser plate 13, so that only light of a predetermined polarization direction is transmitted through the polarizer plate 3. The light transmitted through the polarizer plate 3 is reflected by the polarizing beam splitter 4, and enters the display element 5.

In the display element 5, the incident light is modulated according to an image signal. Here, image light corresponding to ON in the image signal emerges after being converted into light with a polarization direction perpendicular to that of the incident light by the display element 5, and is thus transmitted through the polarizing beam splitter 4 to enter the prism 21 through the prism surface 21a. On the other hand, image light corresponding to OFF in the image signal emerges without its polarization direction being changed in the display element 5, and is thus intercepted by the polarizing beam splitter 4 not to enter the prism 21.

In the prism 21, the image light that has entered it is totally reflected once on each of the prism surfaces 21c and 21b of the prism 21 that face each other, and is then incident on the holographic optical element 23. By the holographic optical element 23, only light of particular wavelengths (three wavelengths corresponding to R, G, and B) is diffraction-reflected to emerge through the prism surface 21b to reach the pupil EP. Thus, at the position of the pupil EP, an observer can observe, as a virtual image, the image IM displayed on the display element 5.

On the other hand, the prism 21, the prism 22, and the holographic optical element 23 transmit almost all outside light, and thus the observer can observe the outside world image in a see-through fashion. Accordingly, the virtual image of the image IM displayed on the display element 5 is observed in a form superimposed on a part of the outside world image.

As described above, the image display apparatus 1 includes a display element 5 which displays an image IM and an eyepiece optical system 6 which guides image light from the display element 5 to a pupil EP of an observer, wherein the eyepiece optical system 6 includes a prism 21 and a volume-phase holographic optical element 23, and the holographic optical element 23 lies in contact with the prism 21. Here, the prism surface 21d that lies in contact with the holographic optical element 23 is formed of a conic surface, and the prism surface 21a on which the image light from the display element 5 is incident first is formed of a conic surface.

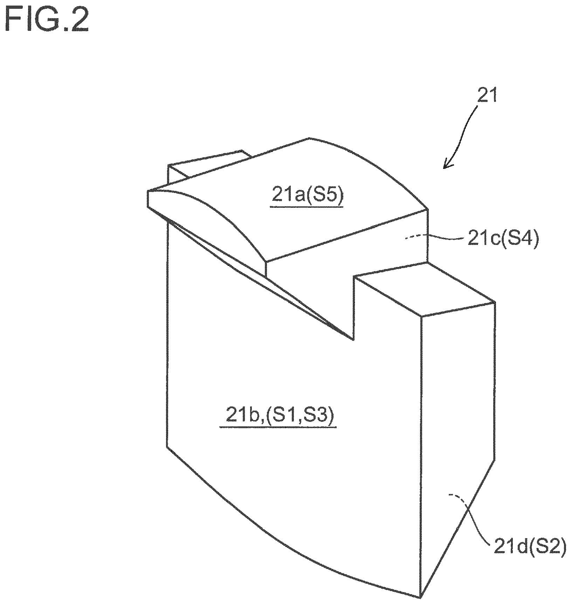

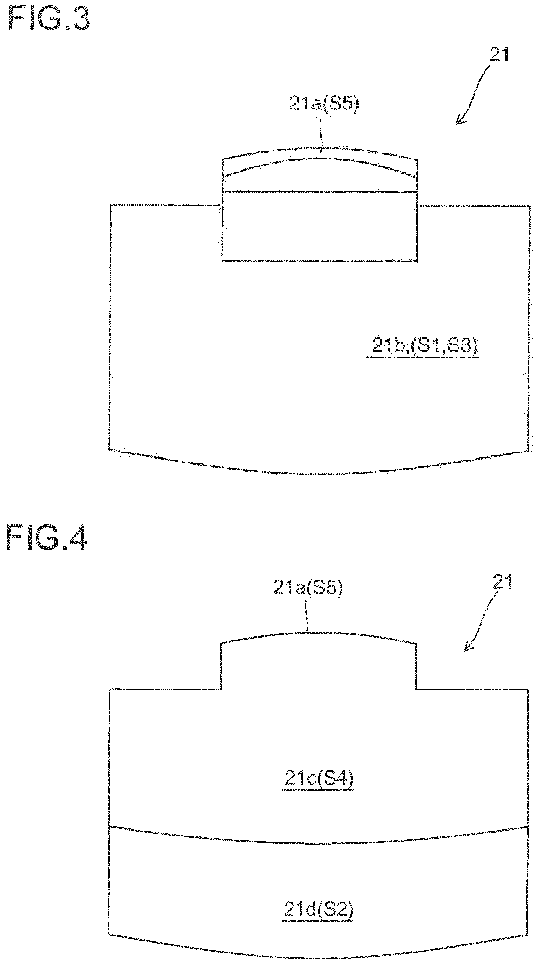

That the prism 21 has prism surfaces 21a and 21d in the shapes of conic surfaces as described above is one feature of the image display apparatus 1. Figs. 2 to 4 show the external appearance of the prism 21. Fig. 2 is a perspective view of the prism 21 as seen from obliquely above on the observer's eye side, Fig. 3 is a rear view of the prism 21 as seen from the observer's eye side, and Fig. 4 is a front view of the prism 21 as seen from the outside world side. The conic surfaces both have the respective vertices on the observer's eye side. Accordingly, it is seen that, as seen from the observer's eye side (Fig. 3), the incidence-side prism surface 21a has a large curvature in the bottom side and, as seen from the outside world side (Fig. 4), the prism surface 21d to which the holographic optical element 23 is bonded has a large curvature in the bottom side.

As described above, by giving the prism surface 21d that lies in contact with the holographic optical element 23 a conic shape and giving the incidence-side prism surface 21a too a conic shape, it is possible to improve distortion. A conic shape permits a curvature to be large on the side near its vertex and smaller on the side far from it, and provides freedom for correction against asymmetry due to optical path deflection.

Moreover, giving the prism surfaces 21a and 21d conic shapes allows easy bonding of flat film. For example, in a case where a hologram photosensitive material in the form of film is bonded to the prism surface 21d and is exposed to two light beams so that the interference between those light beams produces the holographic optical element 23, a conic shape allows easy bonding the hologram photosensitive material in the form of film.

It is preferable that, as in the image display apparatus 1, the display element 5 have a rectangular display surface and that the short-side direction (Y direction) of the display surface is aligned with the direction in which the two conic surfaces (prism surfaces 21a and 21d) have a curvature of zero. The short-side direction of the display surface is a direction that is suitable for correction of distortion exploiting the asymmetry of a conic surface. That is, for the sake of convenient correction, it is preferable to point the vertices of cones in the short-side direction of the rectangular display surface of the display element 5 to produce a difference in curvature. Since the holographic optical element 23 is obliquely eccentric with respect to the prism 21, by pointing the vertices of the cones in the short-side directions, it is possible to cope with its asymmetry.

It is preferable that the two conic surfaces (prism surfaces 21a and 21d) be both so disposed that the respective vertices are located on the observer's eye side. In achieving correction with two conic surfaces in combination, there exists a direction in which it is preferable that their curvatures vary, and by pointing the vertices of the cones, for both the two conic surfaces, to the observer's eye side, it is possible to correct distortion satisfactorily. For example, the cone vertex of the prism surface 21d, seeing that the image light emerges toward the pupil EP after flat-surface reflection, is arranged on the observer's eye side. In contrast, the direction of the cone vertex of the incidence-side prism surface 21a varies with the number of times of reflection of the image light. In a case where, as in this embodiment, the number of times of reflection of the image light is an even number, setting it on the observer's eye side is preferable for satisfactory correction of distortion. In a case where the number of times of reflection of the image light is an odd number, the front-rear relationship at the prism surface 21a is reversed, and therefore it is preferable to set the direction of the cone vertex of the incidence-side prism surface 21a on the outside world side.

It is preferable to adopt a construction that, like the image display apparatus 1, has a illumination optical system 2 which illuminates a display element 5 and the display element 5 modulates light from the illumination optical system 2 to display an image. In general, a volume-phase holographic optical element has high wavelength selectivity, and thus it is preferable that the light source 11 have a narrow wavelength width. For example, adopting a construction that uses an LED as the light source 11 and that modulates illumination light from it leads, because an LED has a narrow wavelength width, to higher light use efficiency than with a self-luminous type such as an organic EL display.

It is preferable that, as in the image display apparatus 1, of the surfaces constituting the prism 21, those through which the image light is transmitted be flat surfaces except the prism surface 21a formed of a conic surface. The image display apparatus 1 is supposed to be incorporated in an optical see-through display, by using flat surfaces as those prism surfaces through which the image light is transmitted except the prism surface 21a formed of a conic surface, it is possible to suppress the effect of a refractive action on the outside world image.

By incorporating the image display apparatus 1 (Fig. 1) described above, it is possible to build an optical see-through display provided with a function of projection-displaying, with the holographic optical element 23, an image IM at an observer's eye in a see-through fashion. The optical see-through display can be a HMD, a HUD, or the like, and as a example, an eyeglasses-like head-mounted display (HMD) provided with the image display apparatus 1 will be described below.

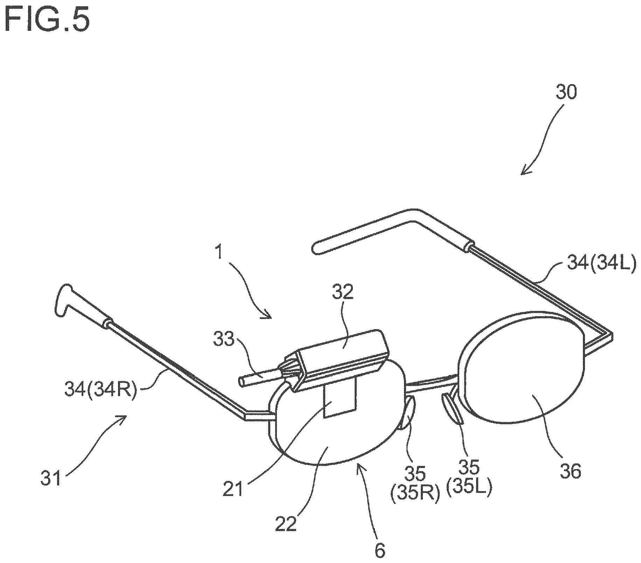

Fig. 5 shows an outline structure of an eyeglasses-like head-mounted display 30 provided with the image display apparatus 1. The head-mounted display 30 is composed of the image display apparatus 1 described above and a support member 31.

The illumination optical system 2, the display element 5, and the like of the image display apparatus 1 are housed inside a housing 32, and a top end part of the eyepiece optical system 6 is also housed inside the housing 32. As described previously, the eyepiece optical system 6 is composed of prisms 21 and 22 bonded together, and as a whole is shaped like one of the lenses of eyeglasses (in Fig. 5, the lens for the right eye). The light source 11 and the display element 5 inside the housing 32 are connected to a circuit board (unillustrated) via a cable 33 that is laid to penetrate the housing 32, and are fed with driving electric power and an image signal from the circuit board.

The image display apparatus 1 may be configured to further include an imaging device for taking still and moving images, a microphone, a loudspeaker, an earphone, and the like, and to be capable of exchanging (receiving and transmitting) information on taken and displayed images and information on sounds with an external server or terminal across a communication network such as the Internet.

The support member 31 is a support mechanism that corresponds to the frame of eyeglasses, and supports the image display apparatus 1 in front of an eye of the observer (in Fig. 5, in front of the right eye). The support member 31 includes temples 34 (a right temple 34R and a left temple 34L) which make contact with a left and a right side part of the observer's head and nose pads 35 (a right nose pad 35R and a left nose pad 35L) which make contact with the observer's nose. The support member 31 also supports a lens 36 in front of the observer's left eye, and the lens 36 is a dummy lens.

With the head-mounted display 30 worn on the observer's head, when an image is displayed on the display element 5, the image light is directed via the eyepiece optical system 6 to the optical pupil. Thus, adjusting the observer's pupil to the position of the optical pupil permits the observer to observe an enlarged virtual image of the display image of the image display apparatus 1. Simultaneously, the observer can observe an outside world image via the eyepiece optical system 6 in a see-through fashion.

Owing to the image display apparatus 1 being supported on the support member 31, the observer can observe the image presented by the image display apparatus 1 in a hands-free fashion stably for a long time. Two image display apparatuses 1 may be used to allow image observation with both eyes.

Although in the construction of the embodiment described above the holographic optical element 23 is of a reflection type, it may instead be of a transmission type. Although the prism surface 21a is a convex surface and the prism surface 21d is a concave surface (as the shape of the prism, a convex surface), whether they are concave or convex is not limited to how they are in the embodiment. In the embodiment described above, with a view to correcting distortion against asymmetry due to optical path deflection, the prism surfaces 21a and 21d are formed as conic surfaces to produce a difference in the curvatures of the prism surfaces between different image positions in the direction of eccentricity. Thus, the holographic optical element 23 may be of a transmission type, and the conic surfaces may be concave or convex.

**EXAMPLES**

Hereinafter, the construction and the like of image display apparatuses embodying the present invention will be described more specifically by presenting the construction data and the like of a practical and a comparative example. Practical Example presented below is a numerical example corresponding to the embodiment described previously, and the outline sectional view (Fig. 1) showing the embodiment also shows the optical arrangement, optical path, and the like of Practical Example.

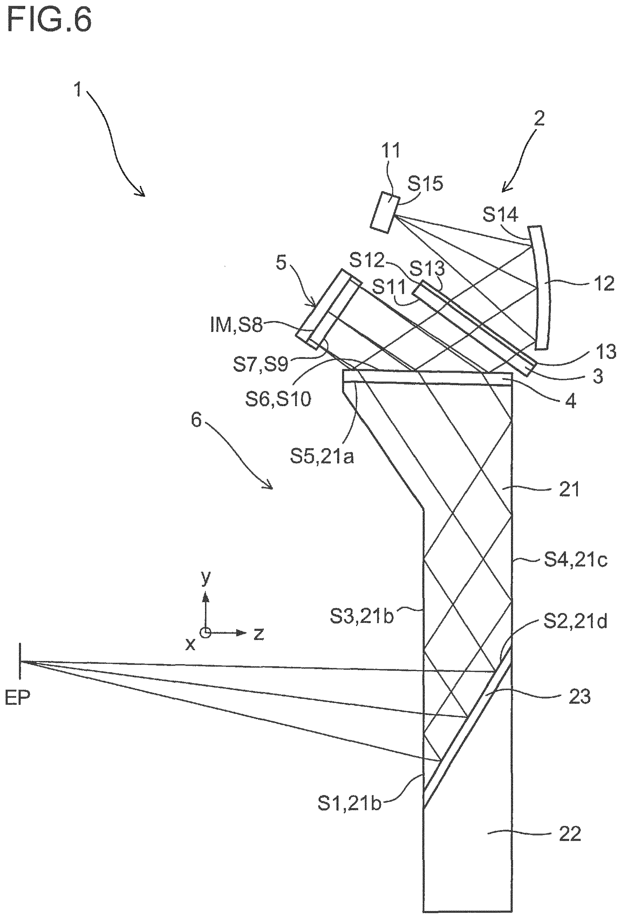

Comparative Example corresponds to Practical Example of the image display apparatus disclosed in Patent Document 1, and Fig. 6 is an outline sectional view of it. In Practical Example (Fig. 1) embodying the present invention, the polarizing beam splitter 4 is disposed at a predetermined gap left from the prism surface 21a on which light is incident first in the prism 21; in contrast, in Comparative Example (Fig. 6), the polarizing beam splitter 4 is bonded to the prism surface 21a. Moreover, in Practical Example, the prism surfaces 21a and 21d are formed of conic surfaces; in contract, in Comparative Example, the prism surface 21a is formed of a flat surface, and the prism surface 21d is formed of a free-form surface.

Tables 1 to 4 show the construction data and the like of Practical Example (Fig. 1), and Tables 5 to 8 show the construction data and the like of Comparative Example (Fig. 6). In the surface data shown in Tables 1 and 5, a surface Si (surface number i = 1, 2, 3, ...) is the i-th surface from the pupil EP side in the optical path from the light source 11 to the pupil EP, and the surface data is the arrangement data of the surface Si.

In Practical Example, S1 is the image light emergence surface of the prism 21; S2 is the prism surface 21d (HOE bonding surface) of the eyepiece prism 21; S3 is the prism surface 21b (total-reflection surface (the same surface as S1)); S4 is the prism surface 21c (total-reflection surface); S5 is the incidence-side prism surface 21a; S6 and S7 are the transmissive surfaces of the polarizing beam splitter 4; S8 is a cover glass surface of the display element 5; S9 is the liquid crystal surface of the display element 5; S10 is a cover glass surface of the display element 5; S11 is the reflective surface of the polarizing beam splitter 4; S12 is the emergence surface of the polarizer plate 3; S13 is the boundary surface between the polarizer plate 3 and the diffuser plate 13; S14 is the incidence surface of the diffuser plate 13; S15 is the reflective surface of the illuminating mirror 12; and S16 is the LED emission surface (LED-equivalent surface) of the light source 11. The short-side direction (Y direction) of the liquid crystal surface S9 of the display element 5 coincides with the direction in which the prism surfaces 21a and 21d formed of conic surfaces have a curvature of 0. The prism surfaces 21a and 21d formed of conic surfaces are both so disposed that the respective vertices are located on the observer's eye side.

In Comparative Example, S1 is the image light emergence surface of the prism 21; S2 is the prism surface 21d (HOE bonding surface) of the eyepiece prism 21; S3 is the prism surface 21b (total-reflection surface (the same surface as S1)); S4 is the prism surface 21c (total-reflection surface); S5 is the prism surface 21a (polarizing beam splitter bonding surface); S6 is the transmissive surface of the polarizing beam splitter 4; S7 is a cover glass surface of the display element 5; S8 is the liquid crystal surface of the display element 5; S9 is a cover glass surface of the display element 5; S10 is the reflective surface of the polarizing beam splitter 4; S11 is the emergence surface of the polarizer plate 3; S12 is the boundary surface between the polarizer plate 3 and the diffuser plate 13; S13 is the incidence surface of the diffuser plate 13; S14 is the reflective surface of the illuminating mirror 12; and S15 is the LED emission surface (LED-equivalent surface) of the light source 11.

The arrangement of each surface Si is defined by reference point coordinates (x, y, z) and a rotation angle (ADE) in the surface data. The reference point coordinates of a surface Si are given, assuming the reference point to be the origin of a local rectangular coordinate system (X, Y, Z), as the coordinates (x, y, z) (in mm) of the origin of the local rectangular coordinate system (X, Y, Z) in a global coordinate system (x, y, z), and the inclination of the surface Si is given, assuming the reference point to be the center, as a rotation angle ADE (in degrees) about the X axis (the counter-clockwise rotation with respect to the positive direction of the X axis is the positive direction of the rotation angle about the X axis). All coordinate systems are defined in a right-hand system, and the global rectangular coordinate system (x, y, z) is an absolute coordinate system that coincides with the local rectangular coordinate system (X, Y, Z) of the emergence surface S1. Accordingly, the X and Y directions are the coordinate axis directions in the rectangular coordinate system (X, Y, Z) having the reference point of the surface Si as the origin and having the normal line at the reference point as the Z axis, and in Figs. 1 and 6, the x direction is the direction (the left-right direction of the angle of field) perpendicular to the plane of the figures, and the y axis is the up-down direction (the up-down direction of the angle of field) of the plane of the figures.

The angle of field is 12.0 degrees vertically (Y direction) and 21.3 degrees horizontally (X direction). For a curvature, of the values in the section including the normal line at the position given in the surface data (Table 1), the curvature in the direction (Y direction) in which the surface Si is not curved is taken as CRY, and the curvature in the direction (X direction) perpendicular to that direction is taken as CRX, so that, for the incidence-side prism surface S5, CRY = 0 and CRX = 0.0400 and, for the HOE surface S2, CRY = 0 and CRX = -0.00795.

In the conic surface data of Practical Example shown in Table 2, for each conic surface, the vertex coordinates (x, y, z) and the vertex angle (in degrees) are given. The vertex angle of a conic surface is the central angle of the sector obtained by developing the conic surface.

For both of the holographic optical elements used in Practical Example and Comparative Example, the reference wavelength, that is, the production wavelength (normalized wavelength) at the time of the fabrication of the holographic optical elements, and the reproduction wavelength are both 532 nm, and the diffracted light used is of order 1. A surface Si (HOE surface) that has the diffraction structure of a holographic optical element is defined by formula (DS) below using a local rectangular coordinate system (X, Y, Z) that has the reference point of the surface as the origin. As will be seen from formula (DS), the phase function $\varphi$ is a generating polynomial (dual polynomial) with respect to the position (X, Y) on the holographic optical element, and in the diffractive surface data shown in Tables 3 and 6, the phase coefficients A(j, k) are given for different orders of X and Y (in the first row, different orders of X; in the first column, different orders of Y). In the diffractive surface data, the coefficient for any term that does not appear there equals zero, and for all the data, "E-n" stands for "$\times 10^{-n}$".

$$\varphi = \Sigma\Sigma\{A(j, k) \cdot X^{j} \cdot Y^{k}\} \qquad\qquad (DS)$$

where

$\varphi$        represents the phase function; and

A(j, k)    represents the phase coefficient (HOE coefficient) of order j for X and order k for Y.

As to the free-form surface data shown in Tables 4, 7, and 8, a surface Si formed of a free-form surface (XY polynomial surface) is defined by formula (FS) below using a local rectangular coordinate system (X, Y, Z) having the reference point of the surface as the origin (there is no part that represents a spherical surface term). In the free-from surface data shown in Tables 4, 7, and 8, free-from surface coefficients B(j, k) are given for different orders of X and Y (in the first row, different orders of X; in the first column, different orders of Y). In the free-from surface data, the coefficient for any term that does not appear there equals zero, and for all the data, "E-n" stands for "$\times 10^{-n}$".

$$Z = \Sigma\Sigma\{B(j, k) \cdot X^j \cdot Y^k\} \qquad\qquad (FS)$$

where

Z          represents the amount of sag (mm) in the Z direction (optical axis direction) at the position of coordinates (X, Y); and

B(j, k)    represents the polynomial free-from surface coefficient of order j for X and order k for Y.

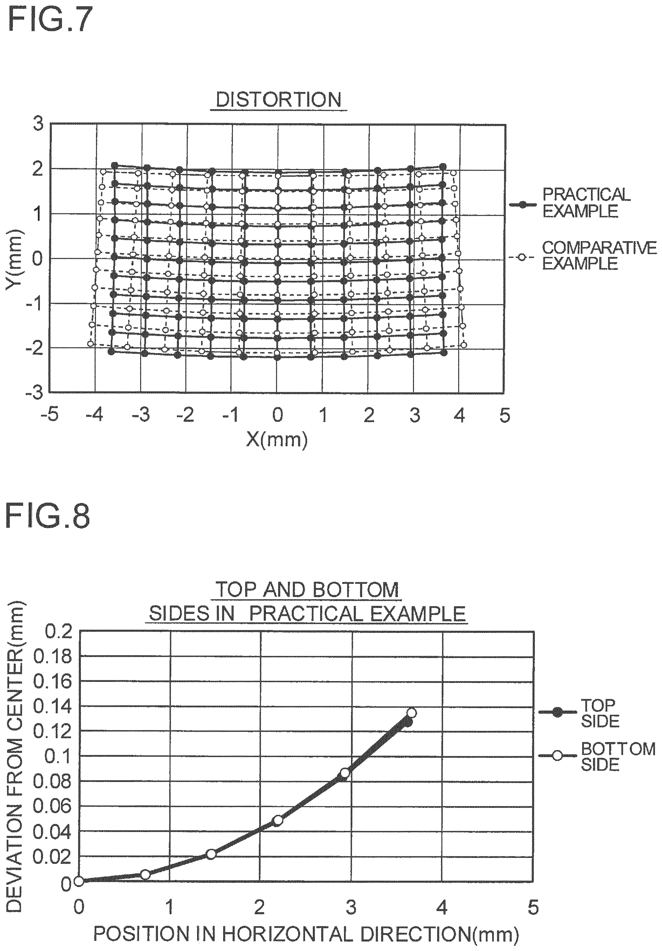

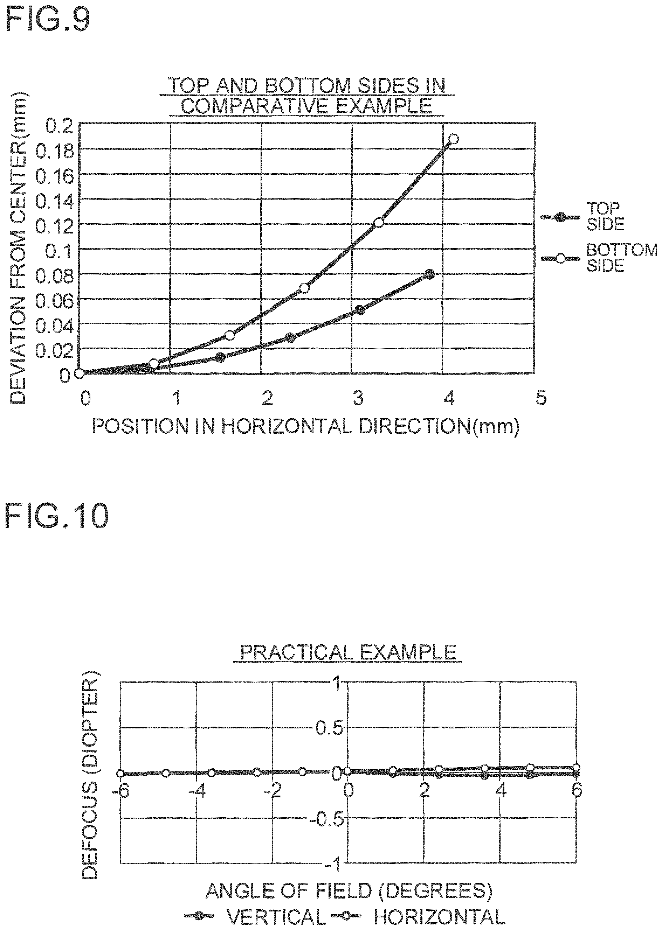

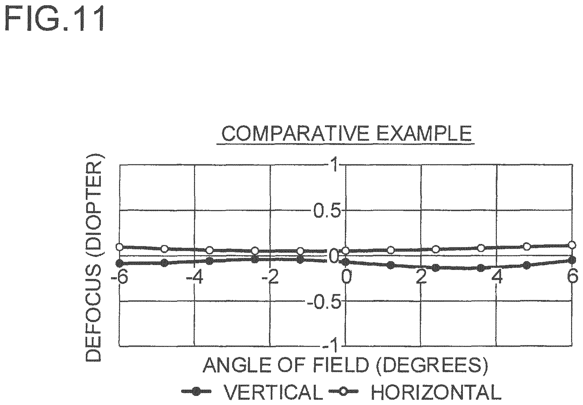

A graph in Fig. 7 shows the distortion in Practical Example and Comparative Example. In Fig. 7, the vertical axis corresponds to the Y direction (mm), and the horizontal axis corresponds to the X direction (mm). A graph in Fig. 8 shows the curves of the top and bottom sides in Practical Example, and a graph in Fig. 9 shows the curves of the top and bottom sides in Comparative Example. In Figs. 8 and 9, the vertical axis represents the deviation (mm) from the center, and the horizontal axis represents the position (mm) in the horizontal direction (X direction). A graph in Fig. 10 shows the curvature of field in Practical Example, and a graph in Fig. 12 shows the curvature of field in Comparative Example. In Figs. 10 and 11, the vertical axis represents the amount of defocus (diopter), and the horizontal axis represents the angle of field (degrees).

A comparison of distortion (Fig. 7) reveals that Practical Example exhibits a better corrected trapezoid than Comparative Example and that, also with respect to the aspect ratio, the aspect ratio of the angle of field and the aspect ratio on the liquid crystal surface are closer together in Practical Example. As to the curves (Figs. 8 and 9) of the top and bottom sides of distortion, while both exhibit curves that are convex downward, the difference between the top and bottom sides is smaller in Practical Example, indicating an improvement from the worse side of Comparative Example. Also the curvature of field (Figs. 10 and 11) is corrected better in Practical Example than in Comparative Example.

[Table 1]

| Practical Example-Surface Data | | X | y | Z | ADE(°) |
|---|---|---|---|---|---|
| Surface Si | | X | y | Z | ADE(°) |
| S16 | LED Equivalent Surface | 0.00 | 29.62 | -1.94 | 153.40 |
| S15 | Illuminating Mirror | 0.00 | 26.48 | 4.26 | 12.14 |
| S14 | Diffuser Plate | 0.00 | 23.00 | 2.07 | 58.91 |
| S13 | Polarizer-Diffuser Boundary Surface | 0.00 | 22.79 | 1.94 | 58.91 |
| S12 | Polarizer Plate | 0.00 | 22.19 | 1.58 | 58.91 |
| S11 | Polarizing Beam Splitter Reflective Surface | 0.00 | 19.60 | -0.02 | -86.09 |
| S10 | Liquid Crystal Top Glass Incidence Surface | 0.00 | 22.39 | -4.35 | -41.60 |
| S9 | Liquid Crystal Surface (Center Coordinates) | 0.00 | 22.86 | -4.87 | 138.40 |
| S8 | Liquid Crystal Top Glass Incidence Surface | 0.00 | 22.39 | -4.35 | 138.40 |
| S7 | Polarizing Beam Splitter | 0.00 | 19.60 | -0.02 | 93.91 |
| S6 | Polarizing Beam Splitter | 0.00 | 18.90 | 0.03 | 93.91 |
| S5 | Incidence-Side Prism Surface | 0.00 | 18.59 | 0.42 | 93.91 |
| S4 | Total-Reflection Surface | 0.00 | 11.50 | 5.00 | 0.00 |
| S3 | Total-Reflection Surface (Identical with Emergence Surface) | 0.00 | 4.00 | 0.00 | 180.00 |

(continued)

| Practical Example-Surface Data | | X | y | Z | ADE(°) |
|---|---|---|---|---|---|
| Surface Si | | | | | |
| S2 | HOE Surface | 0.00 | -0.50 | 2.50 | -31.00 |
| S1 | Emergence Surface | 0.00 | 0.00 | 0.00 | 0.00 |

[Table 2]

| Practical Example-Conic Surface Data | | | | | |
|---|---|---|---|---|---|
| | | Vertex Position Vector (Vertex Coordinates) | | | Vertex Angle (°) |
| | | X | y | z | |
| S5 | Incidence Surface | 0.00 | 17.06 | -21.85 | 268.53 |
| S2 | HOE Surface | 0.00 | -15.70 | -6.63 | 356.47 |

[Table 3]

| Practical Example-HOE Surface Data | | | | | |
|---|---|---|---|---|---|
| HOE Coefficients A(j,k) of HOE Surface S2 | | | | | |
| Y\X | 0 | 2 | 4 | 6 | 8 | 10 |
|---|---|---|---|---|---|---|
| 0 | 0.0000E+00 | -1.1116E-02 | -2.7690E-06 | 1.4945E-08 | -1.1943E-11 | -1.8855E-14 |
| 1 | 0.0000E+00 | -3.5365E-04 | 1.7098E-06 | -7.2934E-09 | 1.8391E-11 | 0.0000E+00 |
| 2 | -1.5917E-02 | 3.9959E-05 | -2.4138E-07 | 12009E-09 | -3.0971E-12 | 0.0000E+00 |
| 3 | 1.2164E-04 | -2.2063E-06 | 1.3436E-08 | -3.1820E-11 | 0.0000E+00 | 0.0000E+00 |
| 4 | -2.4438E-06 | 9.8519E-08 | -3.4216E-10 | -1.2620E-12 | 0.0000E+00 | 0.0000E+00 |
| 5 | -2.1367E-07 | -8.9065E-09 | 5.7047E-11 | 0.0000E+00 | 0.0000E+00 | 0.0000E+00 |
| 6 | 4.9304E-08 | 5.2817E-10 | -4.8185E-12 | 0.0000E+00 | 0.0000E+00 | 0.0000E+00 |
| 7 | 7.4960E-09 | 3.7465E-11 | 0.0000E+00 | 0.0000E+00 | 0.0000E+00 | 0.0000E+00 |
| 8 | -1.2243E-09 | -3.1401E-12 | 0.0000E+00 | 0.0000E+00 | 0.0000E+00 | 0.0000E+00 |
| 9 | -8.4830E-11 | 0.0000E+00 | 0.0000E+00 | 0.0000E+00 | 0.0000E+00 | 0.0000E+00 |
| 10 | 1.2167E-11 | 0.0000E+00 | 0.0000E+00 | 0.0000E+00 | 0.0000E+00 | 0.0000E+00 |

[Table 4]

| Practical Example-Free-Form Surface Data | | |
|---|---|---|
| Free-Form Surface Coefficients B(j,k) of Mirror Surface S15 | | |
| Y\X | 0 | 2 |
| 0 | 0.0000E+00 | -1.5849E-02 |
| 2 | -2.7940E-02 | 0.0000E+00 |
| 3 | -1.4914E-03 | 0.0000E+00 |
| 4 | -6.1626E-05 | 0.0000E+00 |

[Table 5]

| Surface Si | Comparative Example-Surface Data | x | y | z | ADE(°) |
|---|---|---|---|---|---|
| S15 | LED Equivalent Surface | 0.00 | 28.19 | -1.68 | 150.32 |
| S14 | Illuminating Mirror | 0.00 | 24.04 | 6.41 | 2.93 |
| S13 | Diffuser Plate | 0.00 | 22.13 | 3.16 | 53.78 |
| S12 | Polarizer-Diffuser Boundary Surface | 0.00 | 21.93 | 3.02 | 53.78 |
| S11 | Polarizer Plate | 0.00 | 21.36 | 2.60 | 53.78 |
| S10 | Polarizing Beam Splitter Reflective Surface | 0.00 | 19.29 | 0.44 | -91.22 |
| S9 | Liquid Crystal Top Glass Incidence Surface | 0.00 | 22.45 | -4.81 | -34.68 |
| S8 | Liquid Crystal Surface (Center Coordinates) | 0.00 | 22.85 | -5.38 | 145.32 |
| S7 | Liquid Crystal Top Glass Incidence Surface | 0.00 | 22.45 | -4.81 | 145.32 |
| S6 | Polarizing Beam Splitter | 0.00 | 19.29 | 0.44 | 88.78 |
| S5 | Polarizing Beam Splitter Bonding Surface | 0.00 | 18.59 | 0.42 | 88.78 |
| S4 | Total-Reflection Surface | 0.00 | 11.50 | 5.00 | 0.00 |
| S3 | Total-Reflection Surface (Identical with Emergence Surface) | 0.00 | 4.00 | 0.00 | 180.00 |
| S2 | HOE Surface | 0.00 | -0.50 | 2.50 | -31.00 |
| S1 | Emergence Surface | 0.00 | 0.00 | 0.00 | 0.00 |

[Table 6]

| Comparative Example-HOE Surface Data | | | | | |
|---|---|---|---|---|---|
| HOE Coefficients A(j,k) of HOE Surface S2 | | | | | |
| Y\X | 0 | 2 | 4 | 6 | 8 |
| 1 | 0.0000E+00 | 1.0929E-04 | -2.0337E-08 | 2.9047E-10 | -1.2125E-12 |
| 2 | -1.3770E-02 | -2.8925E-06 | 3.9495E-08 | -4.4937E-10 | 1.6690E-12 |
| 3 | 2.2715E-04 | 3.2085E-08 | 7.1422E-10 | -2.0575E-12 | 0.0000E+00 |
| 4 | -9.6669E-06 | 2.3061E-08 | -2.0714E-10 | 2.0210E-12 | 0.0000E+00 |
| 5 | -2.5603E-07 | -4.4426E-09 | -1.1721E-11 | 0.0000E+00 | 0.0000E+00 |
| 6 | 8.9449E-08 | -1.7840E-10 | 4.5787E-13 | 0.0000E+00 | 0.0000E+00 |
| 7 | 1.5597E-08 | 6.4702E-11 | 0.0000E+00 | 0.0000E+00 | 0.0000E+00 |
| 8 | -2.2360E-09 | -1.3842E-12 | 0.0000E+00 | 0.0000E+00 | 0.0000E+00 |
| 9 | -1.8977E-10 | 0.0000E+00 | 0.0000E+00 | 0.0000E+00 | 0.0000E+00 |
| 10 | 2.4227E-11 | 0.0000E+00 | 0.0000E+00 | 0.0000E+00 | 0.0000E+00 |

[Table 7]

| Comparative Example-Free-Form Surface Data | | | | | |
|---|---|---|---|---|---|
| Free-Form Surface Coefficients B(j,k) of HOE Surface S2 | | | | | |
| Y\X | 2 | 4 | 6 | 8 | 10 |
| 0 | -8.5942E-03 | -1.0800E-06 | -6.0420E-10 | 2.1902E-11 | -1.3449E-13 |

[Table 8]

| Comparative Example-Free-Form Surface Data | | |
|---|---|---|
| Free-Form Surface Coefficients B(j,k) of Mirror Surface S14 | | |
| Y\X | 0 | 2 |
| 0 | 0.0000E+00 | -1.2477E-02 |
| 2 | -2.5786E-02 | 0.0000E+00 |
| 3 | -5.5959E-04 | 0.0000E+00 |
| 4 | -8.5243E-06 | 0.0000E+00 |

**List of Reference Signs**

| | |
|---|---|
| 1 | image display apparatus |
| 2 | illumination optical system |
| 3 | polarizer plate |
| 4 | polarizing beam splitter |
| 5 | display element |
| 6 | eyepiece optical system |
| 11 | light source |
| 12 | illuminating mirror |
| 13 | diffuser plate |
| 21, 22 | prism |
| 21a, 21b, 21c, 21d | prism surface |
| 23 | holographic optical element |
| 30 | head-mounted display (optical see-through display) |
| 31 | support member |
| 32 | housing |
| 33 | cable |
| 34, 34R, 34L | temple |
| 35, 35R, 35L | nose pad |
| 36 | lens |
| IM | image |
| EP | pupil |

**Claims**

1. An image display apparatus, comprising:

   a display element which displays an image; and
   an eyepiece optical system which guides image light from the display element to an observer's pupil, wherein
   the eyepiece optical system includes:

      a prism on which the image light is incident; and
      a volume-phase holographic optical element which diffracts the image light guided inside the prism,

   the holographic optical element lies in contact with the prism,
   a prism surface that lies in contact with the holographic optical element is formed of a conic surface, and
   a prism surface on which the image light from the display element is incident first is formed of a conic surface.

2. The image display apparatus of claim 1, wherein

the holographic optical element is of a reflection type.

3. The image display apparatus of claim 1 or 2, further comprising:

an illumination optical system which illuminates the display element,
wherein the display element modulates light from the illumination optical system to display the image.

4. The image display apparatus of any one of claims 1 to 3, wherein
of surfaces constituting the prism, prism surfaces through which the image light is transmitted are, except the prism surface formed of a conic surface, formed of flat surfaces.

5. The image display apparatus of any one of claims 1 to 4, wherein
the display element has a rectangular display surface, and a short-side direction of the display surface coincides with a direction in which the two conic surfaces have a curvature of zero.

6. The image display apparatus of claim 4, wherein
the prism has first and second flat surfaces that face each other,
the image light incident on the prism is totally reflected on the first and second flat surfaces to be incident on the holographic optical element, and
when a number of times of reflection of the image light on the first and second flat surfaces is an even number, the two conic surfaces are both disposed such that respective vertices thereof are located on an observer's eye side.

7. The image display apparatus of claim 4, wherein
the prism has first and second flat surfaces that face each other,
the image light incident on the prism is totally reflected on the first and second flat surfaces to be incident on the holographic optical element, and
when a number of times of reflection of the image light on the first and second flat surfaces is an odd number, a vertex of the conic surface of the prism surface that lies in contact with the holographic optical element is located on an observer's eye side, and a vertex of the conic surface of the prism surface on which the image light is incident first is located on an outside world side.

8. An optical see-through display comprising the image display apparatus of any one of claims 1 to 7 so as to have a function of projection-displaying, with the holographic optical element, the image at an observer's eye in a see-through fashion.

FIG.1

FIG.2

21

21a(S5)

21c(S4)

21b,(S1,S3)

21d(S2)

FIG.3

21a(S5)

21

21b,(S1,S3)

FIG.4

21a(S5)

21

21c(S4)

21d(S2)

FIG.5

# FIG.6

# FIG.7

## DISTORTION

Legend:
- ● PRACTICAL EXAMPLE
- ○ COMPARATIVE EXAMPLE

Axes: Y(mm) vs X(mm)

# FIG.8

## TOP AND BOTTOM SIDES IN PRACTICAL EXAMPLE

Legend:
- ● TOP SIDE
- ○ BOTTOM SIDE

Axes: DEVIATION FROM CENTER(mm) vs POSITION IN HORIZONTAL DIRECTION(mm)

# FIG.9

TOP AND BOTTOM SIDES IN
COMPARATIVE EXAMPLE

# FIG.10

PRACTICAL EXAMPLE

# FIG.11

COMPARATIVE EXAMPLE

## INTERNATIONAL SEARCH REPORT

| | International application No. |
|---|---|
| | PCT/JP2016/056418 |

**A. CLASSIFICATION OF SUBJECT MATTER**
*G02B27/02*(2006.01)i, *G02B5/32*(2006.01)i, *G02B17/08*(2006.01)i

According to International Patent Classification (IPC) or to both national classification and IPC

**B. FIELDS SEARCHED**

Minimum documentation searched (classification system followed by classification symbols)
G02B27/02, G02B5/32, G02B17/08, H04N5/64

Documentation searched other than minimum documentation to the extent that such documents are included in the fields searched
| Jitsuyo Shinan Koho | 1922-1996 | Jitsuyo Shinan Toroku Koho | 1996-2016 |
| Kokai Jitsuyo Shinan Koho | 1971-2016 | Toroku Jitsuyo Shinan Koho | 1994-2016 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | WO 2014/156599 A1 (Konica Minolta, Inc.), 02 October 2014 (02.10.2014), entire text; all drawings & US 2016/0041393 A1 | 1-8 |
| A | US 2014/0361957 A1 (THE ARIZONIA OF REGENTS ON BEHALF OF THE UNIVERSITY OF ARIZONA), 11 December 2014 (11.12.2014), paragraphs [0043] to [0056]; fig. 5 to 6 & JP 2015-508182 A paragraphs [0026] to [0050]; fig. 5 to 6 & WO 2013/112705 A1     & KR 10-2014-0119144 A & CN 104204904 A | 1-8 |

| ☒ Further documents are listed in the continuation of Box C. | ☐ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 11 May 2016 (11.05.16) | 24 May 2016 (24.05.16) |

| Name and mailing address of the ISA/ | Authorized officer |
|---|---|
| Japan Patent Office 3-4-3,Kasumigaseki,Chiyoda-ku, Tokyo 100-8915,Japan | |
| | Telephone No. |

Form PCT/ISA/210 (second sheet) (January 2015)

## INTERNATIONAL SEARCH REPORT

| International application No. |
|---|
| PCT/JP2016/056418 |

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2008-511874 A  (Optical Research Associates), 17 April 2008 (17.04.2008), paragraphs [0154] to [0155] & US 2006/0250696 A1 paragraphs [0189] to [0190] & WO 2006/041596 A2 | 1-8 |
| A | JP 2007-183308 A  (Olympus Corp.), 19 July 2007 (19.07.2007), paragraphs [0076] to [0092]; fig. 13 (Family: none) | 1-8 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2014156599 A1